# EUROPÄISCHE PATENTSCHRIFT

(11) **EP 1 741 597 B1**
(45) Veröffentlichungstag und Bekanntmachung des Hinweises auf die Patenterteilung: **06.02.2008**
(21) Anmeldenummer: 06013564.7
(22) Anmeldetag: 30.06.2006
(51) Int. Cl.: B60Q 1/14

(54) **Schalter, insbesondere Lenkstockschalter für Fahrzeuge**
Switch, in particular a steering column switch for a motor vehicle
Commutateur, en particulier commutateur monté sur la colonne de direction d'un véhicule

(30) Priorität: 07.07.2005 DE 102005031745
(43) Veröffentlichungstag der Anmeldung: 10.01.2007
(73) Patentinhaber: Valeo Schalter und Sensoren GmbH, 74321 Bietigheim-Bissingen (DE)
(72) Erfinder: Ullmann, Tim, 74376 Gemmrigheim (DE); Klein, Rudolf, 74348 Lauffen a.N. (DE)
(74) Vertreter: Bulling, Alexander

(56) Entgegenhaltungen:
- EP-A2- 0 976 611
- EP-A2- 1 361 112
- DE-A1- 10 160 801
- DE-A1- 19 939 090
- DE-C1- 3 740 022
- DE-C1- 19 649 816

## Beschreibung

Die Erfindung betrifft Schalter, insbesondere Lenkstockschalter für Fahrzeuge, mit einem Gehäuse, mit einem in dem Gehäuse beweglich gehaltenen, über ein Betätigungsglied beeinflussbaren Schaltstück, wobei das Schaltstück ein in einer Führung axial verschiebbar gelagertes Steuerteil umfasst, das einen über eine Feder vorgespannten, gegen eine gehäuseseitige Steuerkurve wirkenden Rastabschnitt aufweist. Das Schaltstück, das über das Betätigungsglied beeinflussbar ist, steht hierbei in Wirkverbindung mit einem Funktionselement.

Derartige Schalter finden ihren Einsatz in vielen Bereichen der Technik. Mit einem solchen, vorzugsweise für ein Kraftfahrzeug vorgesehenen Schalter können z.B. die verschiedenen Funktionen der Beleuchtungsanlage, der Fahrtrichtungsanzeigeanlage und/oder der Scheibenwischanlage realisiert werden. Zur Realisierung der Funktionen wird dabei das Schaltstück über das Betätigungsglied in verschiedene Funktionsstellungen gebracht. Die Funktionsstellungen können tastend und/oder rastend ausgeführt sein. Je nach Funktionsstellung werden in Wirkverbindung mit dem Schaltstück stehende Funktionselemente betätigt.

Insbesondere bei Lenkstockschaltern von Kraftfahrzeugen ist es zum Zweck der Realisierung von exakt definierten Funktionsstellungen aufgrund des relativ lang ausgeführten Schalthebels notwendig, ein möglichst spielfreies Zusammenwirken des Schaltstücks bzw. des Steuerteils mit der Steuerkurve zu gewährleisten. Die Realisierung einer derartigen spielfreien Lagerung hat sich allerdings als schwierig herausgestellt.

Aus der DE 199 36 484 C1 ist bekannt geworden, zur Realisierung von exakt definierten Funktionsstellungen das Steuerteil mit zwei entsprechenden Lagerstellen vorzusehen, wobei zumindest eine der beiden Lagerstellen steuerbolzenseitig mit einer aus einem Gleitmaterial bestehenden Schicht versehen ist. Um einen derartigen Schalter zu realisieren, sind sehr geringe Toleranzen an den Lagerstellen bzw. an den Abschnitten des als Steuerbolzen ausgebildeten Steuerteils erforderlich, die mit den Lagerstellen zusammenwirken. Zum Aufbringen des Gleitmaterials sind mehrere Arbeitsschritte erforderlich. Außerdem ist eine derart genaue Fertigung mit hohem Aufwand und deshalb mit entsprechend hohen Kosten verbunden.

Gemäß dem bekannten Stand der Technik tritt ferner die Problematik auf, dass in bestimmten Temperaturbereichen ein gewisses Spiel in der Führung vorhanden ist. Zwar mag in einem vorgegebenen Temperaturbereich eine weitgehend spielfreie Lagerung möglich sein; bei Temperaturen außerhalb dieses Temperaturbereichs ist allerdings aufgrund der unterschiedlichen Wärmeausdehnungen der verwendeten Materialien ein unerwünschtes Spiel vorhanden. Dies führt zu einem unangenehmen Schaltgeräusch, zu einer unangenehmen Haptik beim Schalten und zu einem verstärkten Hebelüberschlagen in die entgegengesetzte Richtung nach dem Rücklauf bzw. Rückführen des Schalters.

Aus der EP 1 361 112 A2 ist ein Schalter bekannt, bei dem das Steuerteil einen sich in Längsrichtung erstreckenden hülsenartigen Aufnahmeabschnitt für die Feder aufweist, wobei im Aufnahmeabschnitt angeordnete Zungen durch die Feder nach radial außen gedrückt werden. Mit diesem Schalter können die o.g. Anforderungen gut erfüllt werden.

Der vorliegenden Erfindung liegt hiervon ausgehend die Aufgabe zugrunde, einen Schalter der eingangs beschriebenen Art derart weiterzubilden, dass dieser die Vorteile des in der EP 1 361 112 A2 genannten Schalters aufweist und bei dem das Steuerteil möglichst spielfrei in dem Schaltstück bzw. in der Führung gelagert ist, ohne dass hochgenaue Lagertoleranzen einzuhalten sind. Außerdem ist unabhängig von den verwendeten, unterschiedlichen Materialien und unabhängig von äußeren Temperatureinflüssen eine spielfreie Lagerung wünschenswert.

Diese Aufgabe wird bei einem Schalter der eingangs beschriebenen Art erfindungsgemäß dadurch gelöst, dass das Steuerteil einen Gegenhalter für einen mit der Federkraft der Feder beaufschlagten Klemmkörper aufweist, wobei mindestens ein Materialabschnitt des Klemmkörpers unter der Federkraft durch Anlage an den Gegenhalter unter Vorspannung nach radial außen gegen die Führung wirkt. Die Vorspannung ist hierbei so vorzusehen, dass sie zum einen hoch genug ist, um vorhandene Toleranzen auszugleichen, und zum anderen dennoch ein axiales Verschieben des Steuerteils in der Führung ermöglicht. Der erfindungsgemäße Schalter hat den Vorteil, dass die Fertigungstoleranzen der Führung und des Steuerteils relativ groß gehalten werden können. Ein mögliches Spiel zwischen der Führung und dem Steuerteil wird aufgrund des mindestens einen nach radial außen wirkenden Materialabschnitte des Klemmkörpers ausgeglichen. Durch Vorsehen der nach radial außen gegen die Führung gerichteten Vorspannung wird auch bei unterschiedlichen Temperaturen eine unterschiedliche Wärmeausdehnung der einzelnen Bauteile ausgeglichen und eine spielfreie Lagerung gewährleistet.

Der erfindungsgemäß Klemmkörper kann insbesondere in axialer Richtung vergleichsweise klein bauen, da eine Hülse zur Aufnahme der Feder nicht erforderlich ist. Dadurch dass die Federkraft auf den Klemmkörper wirkt, wird dieser gegen den Gegenhalter gedrückt. Durch Anlage an den Gegenhalter kann der mindestens eine Materialabschnitt unter Vorspannung nach radial außen gegen die Führung wirken. Die Federkraft wird also zunächst auf den Klemmkörper geleitet und die durch Anlage am Gegenhalter entstehende Kraft genutzt, um die Materialabschnitte des Klemmkörpers nach radial außen zu drücken.

Durch die beschriebene Kraftumleitung kann viel Bauraum eingespart werden, insbesondere dann, wenn der Klemmkörper in axialer Richtung zwischen Gegenhalter und Feder angeordnet ist.

Weiterer Bauraum kann eingespart werden, wenn der Klemmkörper in radialer Richtung zwischen der Führung und einen zum Gegenhalter benachbarten Abschnitt des Steuerteils angeordnet ist, wenn die Feder nicht - wie aus dem Stand der Technik bekannt - räumlich zwischengeschaltet ist. Durch diese Maßnahme muss in radialer Richtung kein Bauraum für eine Hülse vorhanden sein. Der Bauraum kann genutzt werden, um eine größere Feder vorzusehen oder um den Bauraumbedarf des Schalters zu verringern.

In vorteilhafter Weise ist der Gegenhalter einstückig mit dem Steuerteil ausgebildet. Beispielsweise kann der Gegenhalter als Ringschulter ausgebildet sein, die integraler Bestandteil des Steuerteils ist.

Wenn der Gegenhalter eine insbesondere ringförmige Anschlagfläche aufweist, kann eine definierte Anlagefläche für den Klemmkörper geschaffen werden. Somit können die zur Auslenkung der Materialabschnitte nach radial außen erforderlichen Kräfte in definierter Weise in den Klemmkörper eingeleitet werden.

Die Anschlagfläche kann senkrecht zur axialen Richtung, das heißt zur Richtung verlaufen, innerhalb der das Steuerteil längs verschieblich ist. Diese Ausführung hat den Vorteil, dass die Axialpositionen von Gegenhalter, Klemmkörper und Feder besonders leicht zu bestimmen sind.

Die Anschlagfläche kann aber auch gegenüber der axialen Richtung um einen Winkel von > 0° und < 90°geneigt sein. Durch eine solche geneigte Anschlagfläche kann durch den Gegenhalter eine auf den Klemmkörper wirkende Kraft ausgeübt werden, die eine Komponente in radialer Richtung aufweist. Dies unterstützt die Auslenkung der Materialabschnitte des Klemmkörpers nach radial außen.

In ganz besonders vorteilhafter Weise ist die Anschlagfläche zumindest abschnittsweise konisch ausgebildet. Hierdurch wird eine Anschlagfläche geschaffen, die in Abhängigkeit des Konuswinkels eine gewünschte Verteilung von auf den Klemmkörper wirkenden Axial- und Radialkräften ermöglicht. Besonders wenn der Klemmkörper eine zur Anschlagfläche komplementäre Anlagefläche aufweist, weiter insbesondere zumindest abschnittsweise konisch ausgebildet ist, kann eine äußerst exakte Kraftumlenkung vom Gegenhalter auf den Klemmkörper erfolgen, so dass dessen Materialabschnitte in definierter Weise nach radial außen gedrängt werden. Dabei ist die Anordnung aus Klemmkörper, Steuerteil mit Gegenhalter und Führung absolut spielfrei.

Wenn der Klemmkörper mindestens eine sich in axialer Richtung erstreckende, insbesondere schlitzförmige Aussparung aufweist, die einen nach radial außen wirkenden Materialabschnitt zumindest mit begrenzt, kann das Material des Klemmkörper vergleichsweise steif sein. Durch die mindestens eine Aussparung wird der Klemmkörper lokal geschwächt, so dass die angrenzenden Materialabschnitte nach radial außen bewegbar sind.

Die Länge der Aussparung kann gleich der Erstreckung des Klemmkörpers in axialer Richtung sein. Hierdurch ist der Außenumfang des Klemmkörpers in einem Maß variabel, dass der Breite der Aussparung entspricht.

Die Länge der Aussparung kann auch kleiner sein als die Erstreckung des Klemmkörpers in axialer Richtung. Hierdurch können auch mehrere Aussparungen vorgesehen sein, die insbesondere symmetrisch über den Umfang des Klemmkörpers verteilt sind. Diese Aussparungen begrenzen jeweils zwischen sich Materialabschnitte, die radial nach außen gegen die Führung des Schalters wirken. Durch die symmetrische Verteilung wird eine gleichmäßige Vorspannung über den Umfang des Klemmkörpers erzeugt, so dass der Spielausgleich unabhängig von der Drehlage des Steuerteils erfolgen kann.

Es ist auch möglich, dass die nach radial außen wirkenden Materialabschnitte des Klemmkörpers über Gelenkabschnitte miteinander verbunden sind. Diese Gelenkabschnitt können beispielsweise durch Filmscharniere ausgebildet sein, die es ermöglichen, dass die Materialabschnitte zueinander beweglich sind und insbesondere nach radial außen gegen die Führung wirken können.

Eine bevorzugte Ausführungsform ergibt sich auch dann, wenn der mindestens der nach radial außen wirkende Materialabschnitt des Klemmkörpers eine zumindest abschnittsweise zylindrisch ausgebildete Außenfläche aufweist, die zur Anlage an eine zylindrische Innenfläche der Führung ausgebildet ist. Hierdurch kann sich die Außenfläche des Klemmkörpers sanft und gleichmäßig an die Innenfläche der Führung anlegen. Hohe Flächenpressungen und ein daraus resultierendes Klemmen oder Verkanten des Klemmkörpers in der Führung kann somit wirksam verhindert werden.

Außerdem ist in einer derartigen Führung das Steuerteil um seine Längsachse drehbar gelagert, was je nach Ausführung der Steuerkurve vorteilhaft sein kann. Andererseits ist denkbar, dass die Führung im Querschnitt nicht kreisförmig, sondern rechteckig, insbesondere quadratisch ausgebildet sein kann.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Zeichnung zeigen:
- Fig. 1:: einen Längsschnitt durch das freie Ende eines erfindungsgemäßen Schalters mit einem Steuerteil und einem Klemmkörper;
- Fig. 2:: eine perspektivische Darstellung des Steuerteils und des Klemmkörpers gemäß Fig. 1;
- Fig. 3:: einen Längsschnitt durch das Steuerteil und den Klemmkörper gemäß Fig. 1;
- Fig. 4:: eine perspektivische Darstellung des Klemmkörpers gemäß Fig. 1; und
- Fig. 5:: eine perspektivische Darstellung eines Klemmkörpers gemäß einer weiteren erfindungsgemäßen Ausführungsform.

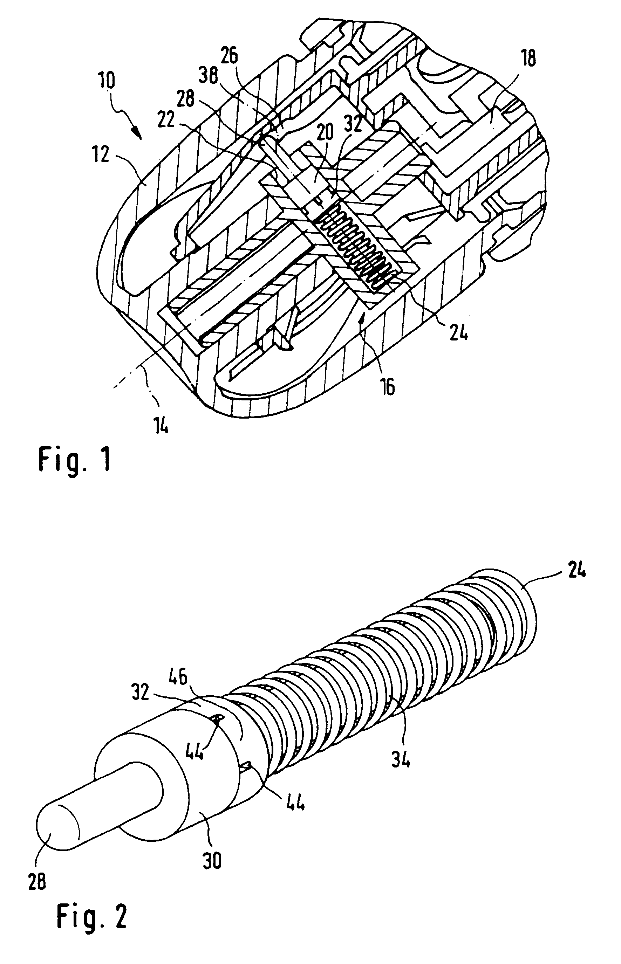

Fig. 1 zeigt das freie Ende eines Schalthebels eines Lenkstockschalters 10. Der Schalter 10 umfasst ein kappenartiges Betätigungsglied 12, das in Richtung der Achse 14 durch Drücken betätigbar ist. Das Betätigungsglied 12 beeinflusst ein Schaltstück 16, das in Wirkverbindung mit einem Kontaktgeber 18 steht. Zur Realisierung von exakt definierten Funktionsstellungen sieht das Schaltstück 16 ein Steuerteil 20 vor, das in einer Führung 22 axial verschiebbar gegen die Federkraft einer Feder 24 gelagert ist. Das Steuerteil 16 umfasst einen mit der Federkraft gegen eine gehäuseseitige Steuerkurve 26 wirkenden Rastabschnitt 28. Die Steuerkurve 26 sieht verschiedene Rastpositionen vor, mit denen der Rastabschnitt 28 zur Realisierung von exakt definierten Funktionsstellungen zusammenwirkt .

Das Steuerteil 20 weist benachbart zum Rastabschnitt 28 einen als Ringschulter ausgebildeten Gegenhalter 30 für einen auch in den Figuren 2, 3 und 4 dargestellten, im Wesentlichen ringförmigen Klemmkörper 32 auf. Der Klemmkörper 32 ist in axialer Richtung zwischen dem Gegenhalter 30 und der Feder 24 angeordnet. Benachbart zum Gegenhalter 30 weist das Steuerteil 20 auf der dem Klemmkörper 32 zugewandten Seite eine stiftförmige Federaufnahme 34 auf.

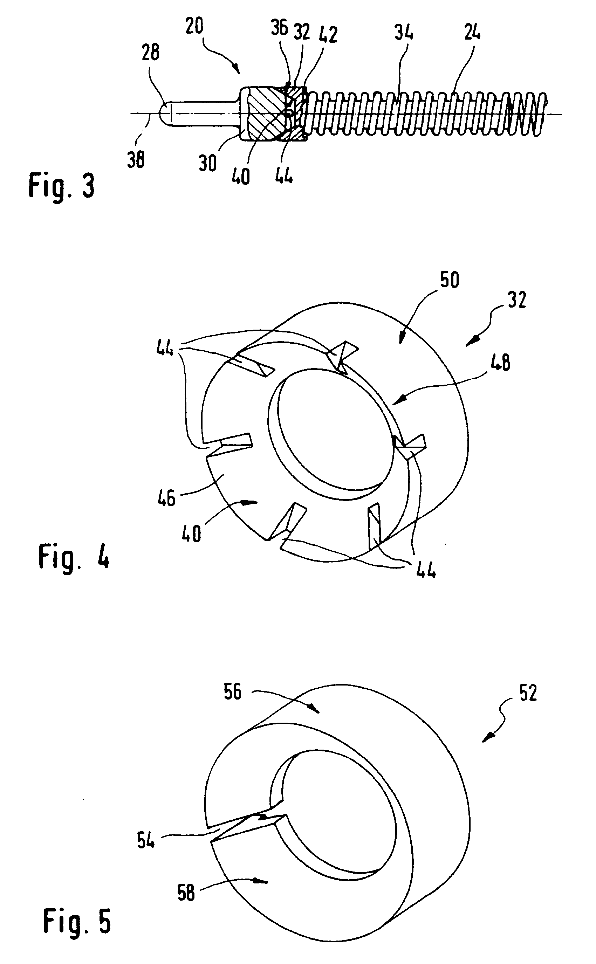

Mit Bezug auf Figur 3 weist der Gegenhalter 30 auf der dem Klemmkörper 32 zugewandten Seite eine konische Anschlagfläche 36 auf. Die Anschlagfläche 36 ist gegenüber der Längsachse 38, entlang der das Steuerteil 20 längs verschieblich in der Führung 22 gelagert ist, um einen Winkel von circa 45° geneigt. Die Anschlagfläche 36 bildet das Gegenstück zu einer komplementär zu dieser Anschlagfläche ausgebildeten Anlagefläche 40 des Klemmkörpers 32, die dem Gegenhalter 30 zugewandt ist. Auch die Anlagefläche 40 ist gegenüber der Achse 38 um circa 45° geneigt.

Der Klemmkörper 32 weist auf der der Anlagefläche 40 gegenüberliegenden Seite eine sich in Richtung der Achse 38 erstreckende Vertiefung 42 auf, in der ein kurzes Stück der Feder 24 aufgenommen ist.

Der Klemmkörper 32 weist entlang seines Umfangs auf der dem Gegenhalter 30 zugewandten Seite schlitzförmige Aussparungen 44 auf. Diese sind in Figur 1 nur angedeutet und besonders gut aus Figur 2 und 4 ersichtlich. Eine Aussparung 44 erstreckt sich parallel zur Achse 38 entlang eines Teils der Erstreckung des Klemmkörpers 32 parallel zu dieser Achse. Die Aussparungen 44 sind gleichmäßig über den äußeren Umfang des Klemmkörpers 32 verteilt und begrenzen jeweils zwischen sich Materialabschnitte 46. Diese Materialabschnitte weisen radial außen Außenflächen 48 auf, die jeweils Abschnitte eines Zylindermantels bilden. Die zylindrischen Außenflächen 48 grenzen jeweils an einen nicht durch Aussparungen 44 unterbrochenen, in Umfangsrichtung geschlossenen Zylindermantelabschnitt 50 des Klemmkörpers 32.

Um den gewünschten Spielausgleich zu erzielen, drückt die Feder 24, die sich einenends am Boden der Führung 22 abstützt, anderenends auf den Klemmkörper 32. Hierdurch wird die Anlagefläche 40 des Klemmkörpers 32 gegen die Anschlagfläche 36 des Gegenhalters 30 gedrückt. Gemäß dem Prinzip actio = reactio drückt die Anschlagfläche 36 des Gegenhalters 30 gegen die Anschlagfläche 40 des Klemmkörpers 32. Hierdurch werden die Materialabschnitte 46 nach radial außen in Richtung auf die Führung 22 gedrückt. Hierdurch wird ein flächiger Kontakt zwischen den teilzylindrischen Außenflächen 48 der Materialabschnitte 46 und der zylindrischen Innenfläche der Führung 22 hergestellt, so dass das Steuerteil 20 spielfrei im Schalter 10 angeordnet ist.

Mit Bezug auf Figur 5 wird eine alternative Ausführungsform eines Klemmkörpers beschrieben, der hier mit Bezugszeichen 52 bezeichnet ist. Der Klemmkörper 52 kann anstelle des Klemmkörpers 32 in einem Schalter 10 gemäß Figur 1 eingebaut sein.

Der Klemmkörper 52 weist im Gegensatz zum Klemmkörper gemäß Figur 4 nur eine Aussparung 54 auf, die schlitzförmig ausgebildet ist und sich entlang der gesamten Breite des Klemmkörpers 52 erstreckt. Durch diese Maßnahme kann die zylindrische Außenfläche 56 des Klemmkörpers 52 sich nach radial außen aufweiten, wenn die der Auflagefläche 40 des Klemmkörpers 32 entsprechende Anlagefläche 58 des Klemmkörpers 52 auf die Anschlagfläche 36 des Gegenhalters 30 gedrückt wird.

## Patentansprüche

1. Schalter, insbesondere Lenkstockschalter für Fahrzeuge, mit einem Gehäuse, mit einem in dem Gehäuse beweglich gehaltenen, über ein Betätigungsglied (12) beeinflussbaren Schaltstück (16), wobei das Schaltstück (16) ein in einer Führung (22) gegen die Federkraft einer Feder (24) in axialer Richtung verschiebbar gelagertes Steuerteil (20) umfasst, das einen mit der Federkraft gegen eine gehäuseseitige Steuerkurve (26) wirkenden Rastabschnitt (28) aufweist, **dadurch gekennzeichnet, dass** das Steuerteil (20) einen Gegenhalter (30) für einen mit der Federkraft der Feder (24) beaufschlagten Klemmkörper (32, 52) aufweist, wobei mindestens ein Materialabschnitt (46) des Klemmkörpers (32, 52) unter der Federkraft durch Anlage an den Gegenhalter (30) unter Vorspannung nach radial außen gegen die Führung (22) wirkt.

2. Schalter nach Anspruch 1, **dadurch gekennzeichnet, dass** der Klemmkörper (32, 52) in axialer Richtung zwischen Gegenhalter (30) und Feder (24) angeordnet ist.

3. Schalter nach Anspruch 1 oder 2, **dadurch gekennzeichnet, dass** der Klemmkörper (32, 52) in radialer Richtung zwischen der Führung (22) und einem zum Gegenhalter (30) benachbarten Abschnitt (34) des Steuerteils (20) angeordnet ist, insbesondere ohne räumliche Zwischenschaltung der Feder (24).

4. Schalter nach mindestens einem der vorhergehenden Ansprüche, **dadurch gekennzeichnet, dass** der Gegenhalter (30) einstückig mit dem Steuerteil (20) ausgebildet ist.

5. Schalter nach mindestens einem der vorhergehenden Ansprüche, **dadurch gekennzeichnet, dass** der Gegenhalter (30) eine insbesondere ringförmige Anschlagfläche (36) aufweist.

6. Schalter nach Anspruch 5, **dadurch gekennzeichnet, dass** die Anschlagfläche (36) zur axialen Richtung (38) senkrecht verläuft.

7. Schalter nach Anspruch 5, **dadurch gekennzeichnet, dass** die Anschlagfläche (36) zur axialen Richtung (38) um einen Winkel von größer 0° und kleiner 90° geneigt ist.

8. Schalter nach Anspruch 6, **dadurch gekennzeichnet, dass** die Anschlagfläche (36) zumindest abschnittsweise konisch ausgebildet ist.

9. Schalter nach mindestens einem der Ansprüche 5 bis 8, **dadurch gekennzeichnet, dass** der Klemmkörper (32, 52) eine zur Anschlagfläche (36) komplementäre Anlagefläche (40, 58) aufweist.

10. Schalter nach Anspruch 9, **dadurch gekennzeichnet, dass** die Anlagefläche (40, 58) zumindest abschnittsweise konisch ausgebildet ist.

11. Schalter nach mindestens einem der vorhergehenden Ansprüche, **dadurch gekennzeichnet, dass** der Klemmkörper (32, 52) mindestens eine sich in axialer Richtung (38) erstreckende, insbesondere schlitzförmige Aussparung (44, 54) aufweist, die einen nach radial außen wirkenden Materialabschnitt (46) zumindest mit begrenzt.

12. Schalter nach Anspruch 11, **dadurch gekennzeichnet, dass** die Länge der Aussparung (54) gleich der Erstreckung des Klemmkörpers (52) in axialer Richtung (38) ist.

13. Schalter nach Anspruch 11, **dadurch gekennzeichnet, dass** die Länge der Aussparung (44) kleiner ist als die Erstreckung des Klemmkörpers (32) in axialer Richtung (38).

14. Schalter nach mindestens einem der Ansprüche 11 bis 13, **dadurch gekennzeichnet, dass** mehrere Aussparungen (44) symmetrisch über den Umfang des Klemmkörpers (32) verteilt sind.

15. Schalter nach mindestens einem der vorhergehenden Ansprüche, **dadurch gekennzeichnet, dass** nach radial außen wirkende Materialabschnitte (46) des Klemmkörpers (32) über Gelenkabschnitte miteinander verbunden sind.

16. Schalter nach mindestens einem der vorhergehenden Ansprüche, **dadurch gekennzeichnet, dass** der mindestens eine nach radial außen wirkende Materialabschnitt (46) des Klemmkörpers (32, 52) eine zumindest abschnittsweise zylindrisch ausgebildete Außenfläche (48, 56) aufweist, die zur Anlage an eine zylindrische Innenfläche der Führung (22) ausgebildet ist.

## Claims

1. A switch, in particular a steering column switch for vehicles, having a housing with a switching element (16), which is movably maintained in the housing and can be affected by means of an actuating member (12), wherein the switching element (16) includes a control element (20) which is seated, displaceable in a guidance device (22) in the axial direction against the spring force of a spring (24), and has a snap-in section (28) acting with spring force against a control cam (26) on the part of the housing, **characterized in that** the control element (20) has a counter-support (30) for a clamping body (32, 52) which is acted upon by the spring force of the spring (24), wherein, by resting against the counter-support (30) under prestress, at least one section (46) of material of the clamping body (32, 52) acts with spring force radially outwardly against the guidance device (22).

2. The switch in accordance with claim 1, **characterized in that** the clamping body (32, 52) is arranged in the axial direction between the counter-support (30) and the spring (24).

3. The switch in accordance with claim 1 or 2, **characterized in that** the clamping body (32, 52) is arranged in the radial direction between the guidance device (22) and a section (34), adjoining the counter-support (30), of the control element (20), in particular without the spatial interposition of the spring (24).

4. The switch in accordance with at least one of the preceding claims, **characterized in that** the counter-support (30) is embodied as one piece with the control element (20).

5. The switch in accordance with at least one of the preceding claims, **characterized in that** the counter-support (30) has a particularly annular stop face (36).

6. The switch in accordance with claim 5, **characterized in that** the stop face (36) extends perpendicularly in respect to the axial direction (38).

7. The switch in accordance with claim 5, **characterized in that** the stop face (36) is inclined by an angle of greater than 0° and less than 90° in respect to the axial direction (38).

8. The switch in accordance with claim 6, **characterized in that** the stop face (36) is conically embodied at least in sections.

9. The switch in accordance with at least one of claims 5 to 8, **characterized in that** the clamping body (32, 52) has a contact face (40, 58), which is complementary to the stop face (36).

10. The switch in accordance with claim 9, **characterized in that** the contact face (40, 58) is conically embodied at least in sections.

11. The switch in accordance with at least one of the preceding claims, **characterized in that** the clamping body (32, 52) has at least one, in particular slit-shaped recess (44, 54) extending in the axial direction (38), which at least aids in delimiting a radially outwardly acting section (46) of material.

12. The switch in accordance with claim 11, **characterized in that** the length of the recess (44) equals the extension of the clamping body (52) in the axial direction (38).

13. The switch in accordance with claim 11, **characterized in that** the length of the recess (44) is less than the extension of the clamping body (52) in the axial direction (38).

14. The switch in accordance with at least one of claims 11 to 13, **characterized in that** several recesses (44) are symmetrically distributed over the circumference of the clamping body (32).

15. The switch in accordance with at least one of the preceding claims, **characterized in that** radially outwardly acting sections (46) of material of the clamping body (32) are connected with each other by means of hinged sections.

16. The switch in accordance with at least one of the preceding claims, **characterized in that** the at least one radially outwardly acting section (46) of material of the clamping body has an exterior surface (48, 56), which is embodied to be cylindrical at least in sections and is embodied for contacting a cylindrical inner surface of the guidance device (22).

## Revendications

1. Commutateur, en particulier commutateur fixé à la colonne de direction pour véhicules, comprenant un boîtier, une pièce de commutation (16) maintenue de façon mobile dans le boîtier et pouvant être influencée par l'élément d'actionnement (12), la pièce de commutation (16) comprenant une partie de commande (20) logée dans un guide (22) de façon à pouvoir coulisser dans la direction axiale contre la force de ressort d'un ressort (24), laquelle partie présente une partie d'encliquetage (28) agissant avec la force de ressort contre une came de commande (26) côté boîtier, **caractérisé en ce que** la partie de commande (20) présente un contre-support (30) pour un corps de serrage (32, 52) sollicité avec la force de ressort du ressort (24), au moins une partie du matériau (46) du corps de serrage (32, 52) agissant sous l'effet de la force de ressort par appui sur le contre-support (30) sous précontrainte vers l'extérieur radialement contre le guide (22).

2. Commutateur selon la revendication 1, **caractérisé en ce que** le corps de serrage (32, 52) est disposé dans le sens axial entre le contre-support (30) et le ressort (24).

3. Commutateur selon la revendication 1 ou 2, **caractérisé en ce que** le corps de serrage (32, 52) est disposé dans la direction radiale entre le guide (22) et une partie (34), voisine du contre-support (30), de la partie de commande (20), en particulier sans intercalation dans l'espace du ressort (24).

4. Commutateur selon au moins l'une quelconque des revendications précédentes, **caractérisé en ce que** le contre-support (30) est réalisé d'une seule pièce avec la partie de commande (20).

5. Commutateur selon au moins l'une quelconque des revendications précédentes, **caractérisé en ce que** le contre-support (30) présente une surface de butée (36) en particulier de forme annulaire.

6. Commutateur selon la revendication 5, **caractérisé en ce que** la surface de butée (36) est disposée verticalement par rapport à la direction (38) axiale.

7. Commutateur selon la revendication 5, **caractérisé en ce que** la surface de butée (36) est inclinée par rapport à la direction (38) axiale d'un angle supérieur à 0° et inférieur à 90°.

8. Commutateur selon la revendication 6, **caractérisé en ce que** la surface de butée (36) est conçue conique au moins par endroits.

9. Interrupteur selon au moins l'une quelconque des revendications 5 à 8, **caractérisé en ce que** le corps de serrage (32, 52) présente une surface d'appui (40, 58) complémentaire de la surface de butée (36).

10. Interrupteur selon la revendication 9, **caractérisé en ce que** la surface d'appui (40, 58) est conçue conique au moins par endroits.

11. Commutateur selon au moins l'une quelconque des revendications précédentes, **caractérisé en ce que** le corps de serrage (32, 52) présente au moins un évidement (44, 54) s'étendant dans la direction (38) axiale, en particulier en forme de fente, qui délimite au moins en même temps une partie de matériau (46) agissant vers l'extérieur radialement.

12. Commutateur selon la revendication 11, **caractérisé en ce que** la longueur de l'évidement (54) est identique à l'étirement du corps de serrage (52) dans la direction axiale (38).

13. Commutateur selon la revendication 11, **caractérisé en ce que** la longueur de l'évidement (44) est inférieure à l'extension du corps de serrage (32) dans la direction axiale (38).

14. Commutateur selon au moins l'une quelconque des revendications 11 à 13, **caractérisé en ce que** plusieurs évidements (44) sont répartis de façon symétrique sur le pourtour du corps de serrage (32).

15. Commutateur selon au moins l'une quelconque des revendications précédentes, **caractérisé en ce que** des parties de matériau (46), agissant vers l'extérieur radialement, du corps de serrage (32) sont reliées entre elles par des parties articulées.

16. Commutateur selon au moins l'une quelconque des revendications précédentes, **caractérisé en ce que** au moins une partie de matériau (46) agissant vers l'extérieur radialement, du corps de serrage (32, 52) présente une surface extérieure (48, 56) conçue cylindrique au moins par endroits, qui est conçue pour s'appuyer sur une surface intérieure cylindrique du guide (22).
